(19) Europäisches Patentamt
European Patent Office
Office européen des brevets

(11) **EP 4 009 804 B1**

(12) **EUROPEAN PATENT SPECIFICATION**

(45) Date of publication and mention
of the grant of the patent:
**10.05.2023  Bulletin 2023/19**

(21) Application number: **20745209.5**

(22) Date of filing: **28.07.2020**

(51) International Patent Classification (IPC):
**A23G 9/48** *(2006.01)*

(52) Cooperative Patent Classification (CPC):
**A23G 9/48**

(86) International application number:
**PCT/EP2020/071254**

(87) International publication number:
**WO 2021/023578 (11.02.2021 Gazette 2021/06)**

(54) **NOVEL CONFECTION PRODUCT**

NEUARTIGES KONFEKTPRODUKT

NOUVEAU PRODUIT DE CONFISERIE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.08.2019  EP 19190103**

(43) Date of publication of application:
**15.06.2022  Bulletin 2022/24**

(73) Proprietor: **Unilever IP Holdings B.V.**
**3013 AL Rotterdam (NL)**

(72) Inventors:
• **BUNCE, Martin, Christopher**
**Wiltshire SN8 4AW (GB)**
• **MASKELL, William, John**
**Wiltshire SN8 4AW (GB)**
• **WATSON, Mark**
**Wiltshire SN8 4AW (GB)**

(74) Representative: **Turner, Felicity Margaret Mary**
**Unilever Patent Group**
**Bronland 14**
**6708 WH Wageningen (NL)**

(56) References cited:
**WO-A1-2017/001372      DE-U1- 29 901 521**
**GB-A- 899 042          GB-A- 920 686**
**JP-U- 3 121 400        JP-U- S63 138 088**
**US-A- 2 486 194        US-A- 2 925 347**
**US-A1- 2001 018 083**

• **"Magnum Ice Cream Tubs", , 15 March 2018 (2018-03-15), XP002797187, Retrieved from the Internet: URL:https://www.theimpulsivebuy.com/wordpress/2018/03/15/review-magnum-ice-cream-tubs/ [retrieved on 2020-01-23]**

**Description**

**Field of the invention**

A confection product (1) comprising a receptacle (2), a membrane (3), a confection (4) and a confection coating composition (5), wherein the receptacle (2) comprises the confection (4) and confection coating composition (5), and the membrane (3) comprises a convex recess (6) and convex face (11), wherein the confection coating composition (5) is opposite to the concave face (8) of the convex recess (6) and the distance (16) between the surface (7) of the confection coating composition (5) and the closest point (12) of the concave face (8) of the membrane (3) is from 0 % to 95 % of the maximum height (9) of the concave face (8).

**Background of the invention**

Sensorial experiences provided by confection products, for example frozen confection products, are typically used to provide novel confection formats for consumers and also enable consumers to identify high quality confection coating compositions. For example, chocolate, when used together with a frozen confection typically has a characteristic snap or cracking sound when broken. This characteristic is demonstrated when the chocolate coating of a single serve stick product, such as MAGNUM, is broken through biting the surface of the frozen confection coating composition. Similarly, the (multiple-serve) MAGNUM tub product, when squeezed, has an audible cracking sound, indicating to the consumer that the product comprises chocolate (WO 2017001372 A1). Alternatively, rather than being present as a confection coating composition, chocolate may be present throughout, for example, a frozen confection. For example, tubs, pints and cups may comprise chocolate in thin layers between confection compositions. US 5,135,767 discloses an ice confectionery containing flakes of crispy composition within its mass. The sensorial experience of the crispy flakes is experienced when the ice confectionery is chewed, i.e.: during consumption rather than when preparing to consume the product or during the initial biting of a product. Document JP3121400U discloses a frozen confection product comprsing a receptacle , a membrane, one or more frozen confections and a chocolate sauce coating.

Typically, when a confection product is consumed, the majority of bites or mouthfuls taken will comprise an amount of all components of the confection product. For example, frozen confection cone products, the majority of bites or mouthfuls would comprise the parts of the cone, frozen confection coating composition, frozen confection, inclusions and sauce.

Tub products that comprise a confection coating composition on the surface of the confection present within a receptacle, if not broken through squeezing the tub, are typically broken through the use of a metal spoon or wooden spatula.

Typically, when the confection coating composition is broken using a spoon or spatula, the confection coating composition is broken into two or three pieces. Alternatively, the spoon or spatula partially breaks the confection coating composition at the location where the force of the spoon or spatula is applied, resulting in the confection coating composition becoming impaled with the spoon or spatula.

Breaking the confection coating composition into two or three pieces, results in pieces of confection coating composition that are typically too large to consume in one bite, mouthful or spoonful and are consequently consumed without additional components of the confection product. In order to consume all of the components of the confection product per bite, mouthful or spoonful, the consumer must break the confection coating composition into additional, smaller pieces. Breaking the confection coating composition into smaller pieces requires applying force to pieces that have become moveable, resulting in the disadvantage that the confection composition has the potential to be pushed out of the tub. Alternatively, the consumer could wait for the coating material to soften through warming; however, the sensorial characteristic of the chocolate snap or cracking sound may be reduced or lost, and if the confection is frozen, it may melt. In both scenarios, the sensorial characteristics that the novel product is intended to provide may be reduced or lost.

When the confection coating composition remains intact and is impaled by the spoon or spatula, once impaled, the consumer removes the spoon from the confection product together with the confection coating composition. Both sensorial characteristics, the cracking sounds and consuming all of the components per spoonful are reduced or lost.

There is a need to provide a novel frozen confection product that enables the consumer to experience all of the sensorial characteristics such as sound, taste and texture per bite of product. Additionally, there is a need to provide a novel confection product that enables the consumer to consume the product easily and with the least mess possible. Furthermore, there is a desire to provide novel confection products with enhanced sensorial characteristics in order to provide novel and innovative products to consumers.

The present invention provides a confection product that enables the consumer to experience all of the sensorial characteristics such as sound, taste and texture per bite, mouthful or spoonful of confection product. Additionally, the invention provides a novel confection product that enables the consumer to consume the product easily and as cleanly as possible. Furthermore, the invention provides an enhancement of the desired sensorial characteristics of the product through the combination of the confection product physical properties and packaging materials.

## Summary of the invention

A confection product (1) comprising a receptacle (2), a membrane (3), a confection (4) and a confection coating composition (5), wherein the receptacle (2) comprises the confection (4) and confection coating composition (5), and the membrane (3) comprises a convex recess (6) and convex face (11), wherein the confection coating composition (5) is opposite to the concave face (8) of the convex recess (6) and the distance (16) between the surface (7) of the confection coating composition (5) and the closest point (12) of the concave face (8) of the membrane (3) is from 0 % to 95 % of the maximum height (9) of the concave face (8).

## Detailed description of the invention

A confection product (1) comprising a receptacle (2), a membrane (3), a confection (4) and a confection coating composition (5), wherein the receptacle (2) comprises the confection (4) and confection coating composition (5), and the membrane (3) comprises a convex recess (6) and convex face (11), wherein the confection coating composition (5) is opposite to the concave face (8) of the convex recess (6) and the distance (16) between the surface (7) of the confection coating composition (5) and the closest point (12) of the concave face (8) of the membrane (3) is from 0 % to 95 % of the maximum height (9) of the concave face (8).

Receptacle (2) means an inedible container suitable for retaining food products such as a tub, cup or pint. For example: Ben and Jerry's pint receptacle, the MAGNUM pint receptable, Carte d'Or tub, Ben and Jerry's mini cup receptacle. ('The Science of Ice Cream'; C. Clarke, RSC Paperbacks 2004, page 101). The receptacle (2) typically comprises a base (14), walls and an open face (15) suitable for receiving a membrane (3) suitable for closing or sealing the receptacle (2). The receptacle (2) typically has a volume of from 50 to 700 ml, preferably from 80 to 600 ml, more preferably from 100 ml to 550 ml.

Membrane (3) means a closing or sealing means positioned at or within the open face of the receptacle (2), i.e.: the opening or mouth of the receptacle (2). The membrane (3) may be either in contact with but not attached to the receptacle (2), or in contact with and attached to the receptacle (2). Attached means fixed or adhered. The membrane (3) may also be known as an insert, cover or lid. The membrane (3) is in contact with and attached to the rim of the receptacle (2) or in contact with and attached to a lip or ledge (17) of the wall of the receptacle (2). Preferably, the membrane (3) is in contact with a lip or ledge (17) of the wall of the receptacle (2). When the membrane (3) is attached to the receptacle (2), the membrane (3) is easily removable (i.e.: detachable) from the receptacle by the force applied by a consumer; e.g.: the force applied by the hands of a consumer. If the membrane (3) is attached to the receptacle (2), the membrane (3) may also be known as a sealing means.

In a second embodiment, the membrane (3) is a cover or sealing means and an additional covering means is present, such as a lid.

Typically, receptacles such as pints and cups are cylindrical in shape. Membranes suitable for use as closing or sealing means for receptacles must correspond in shape to the open face (15) of the receptable (2) and, for receptables having an annular open face (15), the corresponding membranes are consequently annular. The open face (15) of a receptacle may be substantially annular. Substantially annular means that the circumference of the open face (15) may comprise a plurality of straight edges having a cross section corresponding to the shape of a polygon, for example, a hexagon, octagon, or decagon. Preferably the membrane (3) is annular and has a diameter (10) of from 40.0 mm to 120.0 mm, preferably from 50.0 mm to 110.0 mm.

In an aspect of the invention the membrane (3) that is positioned to cover the mouth of the receptacle (2) is recessed towards the base of the receptacle (2) and the recess of the membrane (3) has a convex or convex analogue shaped face (11) within the recess. The term 'convex recess' means an indentation from a flat plane wherein the indentation is largest towards the edge of the indentation of the plane and smallest towards the central axis of the indentation of the plane, and the shape of the indentation about the central axis is a convex or convex analogue shape when viewed from the plane that is indented. The position of the maximum height (9) of the convex or convex analogue shaped face (11) of the membrane (3) corresponds to the position of smallest indentation of the membrane (3) when measured from the plane that is indented. The maximum height (9) of the convex or convex analogue shaped face (11) of the membrane (3) may be towards the central axis of the membrane (3) but may also be offset from the central axis of the membrane (3). Preferably, the maximum height (9) of the convex or convex analogue shaped face (11) of the membrane (3) is at the central axis of the membrane (3).

Convex means a shape that is substantially hemispherical, hemispherically-shaped semi-hemispherical or domed. Convex analogue shape means a shape that is substantially hemispherical, hemispherically-shaped, semi-hemispherical or domed that has been altered; for example: a semi-hemispherical or domed shape that is flattened at its maximum height (9) from its base (12) or flattened and textured at its maximum height (9) from its base (12). Textured means that the flattened area is tactile and not smooth, for example the flattened area is ridged or embossed to form raised and depressed nodes. Substantially hemispherical means that the closest point (12) of the concave face (8) of the membrane (3) may comprise a plurality of straight edges having a cross section corresponding to the shape of, for example, a polygon, for example, a hexagon, octagon, or decagon, consequently, the hemispherical convex shape.

Concave face (8) of the convex recess (6) means the face of the membrane (3) that is concave shaped and faces towards the base (14) of the receptacle (2). The shape of the concave face (8) of the convex recess (6) typically corresponds to the shape of the convex face (11) of the convex recess (6).

Convex face (11) of the convex recess (6) means the face of the membrane (3) that is convex or convex analogue shaped and faces away from the base (14) of the receptacle (2).

In an aspect of the invention the ratio of the maximum height (9) of the convex or convex analogue shape of the membrane (3) to the distance (16) between the surface (7) of the confection coating composition (5) and the closest point (12) of the membrane (3) to the surface (7) of the confection coating composition (5)) is from 1.2:1 to 3.5:1 of the maximum height (9) of the concave face (8).

In an aspect of the invention the distance (16) between the surface (7) of the confection coating composition (5) and the closest point (12) of the concave face (8) of the membrane (3) is from 0 % to 95 % of the maximum height (9) of the concave face (8). Preferably, the distance between the surface (7) of the confection coating composition (5) and the closest point (12) of the concave face (8) of the membrane (3) is from 15 % to 92 % of the maximum height (9) of the concave face (8). More preferably, the distance (16) between the surface (7) of the confection coating composition (5) and the closest point (12) of the concave face (8) of the membrane (3) is from 20 % to 90 % of the maximum height (9) of the concave face (9). Even more preferably, the distance (16) between the surface (7) of the confection coating composition (5) and the closest point (12) of the concave face (8) of the membrane (3) is from 25 % to 90 % of the maximum height (9) of the concave face (8). Even more preferably, the distance (16) between the surface (7) of the confection coating composition (5) and the closest point (12) of the concave face (8) of the membrane (3) is from 29 % to 85 % of the maximum height (9) of the concave face (8). Preferably the closest point (12) of the concave face (8) of the membrane (3) is the base of the concave face of the membrane (12).

In an aspect of the invention the membrane (3) is annular and the base of the concave face of the membrane (12) (i.e.: the base of the convex or convex analogue shape) is annular and has a diameter (13) of from 40.0 mm to 100.0 mm, preferably from 45.0 mm to 90.0 mm, preferably 50.0 mm to 85.0 mm. The base of the concave face of the membrane (12) (the base of the convex or convex analogue shape) corresponds to the position of the greatest indentation of the membrane (3).

In an aspect of the invention the ratio of the maximum height (9) of the convex or convex analogue shape (11) of the membrane (3) to the diameter (13) of the base of the convex or convex analogue shape (11) is from 1:1 to 1:30, preferably from 1:3 to 1:20, more preferably from 1:5 to 1:15, more preferably from 1:7 to 1:10.

In an aspect of the invention the surface (7) of the frozen confection coating composition (5) is substantially planar. In a further aspect of the invention, the surface (7) of the frozen confection coating composition (5) is substantially planar and the longest length of the surface (7) is from 50 % to 200%, from 75 % to 150 %, from 90% to 125% of the diameter of the base (12) of the concave face (8) of the membrane (3).

Typically, the circumference of the surface (7) of the frozen confection coating composition (5) is substantially annular or annular.

In a further aspect of the invention the surface (7) of the frozen confection coating composition (5) is substantially planar and fully coats the surface of the frozen confection (4).

In a further aspect of the invention the surface (7) of the frozen confection coating composition (5) is substantially planar and fully coats the surface of the frozen confection (4) and is contiguous with the wall of the receptacle (2). Consequently, the diameter of the surface (7) of the frozen confection coating composition (5) corresponds to the diameter of the inside of the receptacle (2) at the contiguous point of the frozen confection coating composition (5) and receptacle (2).

In an aspect of the invention the surface (7) of the frozen confection coating composition (5) is substantially planar, preferably planar. Substantially planar means that the surface (7) of the frozen confection coating composition (5) is planar although variable within a tolerance limit, that is to say that some areas of the surface (7) of the frozen confection coating composition (5) may be slightly raised or depressed in relation to the plane of the diameter of the base (14) of the receptacle (2).

Typically, the frozen confection coating composition (5) is a singular, continuous component of the frozen confection product (1).

In a preferred embodiment, the invention relates to a frozen confection product (1) comprising a receptacle (2), a membrane (3), one or more frozen confections (4) and at least one frozen confection coating composition (5), wherein the receptacle (2) comprises the frozen confection (4) and frozen confection coating composition (5), and the membrane (3) comprises a convex recess (6) and convex face (11), wherein the frozen confection coating composition (5) comprises a surface (7) and the surface (7) is opposite to the concave face (8) of the convex recess (6) and the distance (16) between the surface (7) of the frozen confection coating composition (5) and the closest point (12) of the concave face (8) of the membrane (3) is from 0 % to 95 % of the maximum height (9) of the concave face (8), with the proviso that the membrane (3) does not encapsulate the one or more frozen confections (4) and at least one frozen confection coating composition (5).

The term: 'The membrane (3) does not encapsulate the one or more frozen confections (4) and at least one frozen confection coating composition (5)' means that the membrane (3) and one or more frozen confections (4) and at least one frozen confection coating composition (5) comprised in the receptacle (3) are in a spaced arrangement. For example, the one or more frozen confections (4) and at least one frozen confection coating composition (5) are not located within the area between the concave face (8) of the membrane (3) and the area encompassed by the circumference of the closest point (12) of the concave face (8) of the membrane (3).

In an aspect of the invention the membrane (3) is flexible. Flexible means that the membrane (3) can be depressed (deformed) by the force exerted by a customer's fingers and/or thumbs. For example: the convex face (11) of the convex recess (6) is pressed by a customer's fingers and/or thumbs so that the convex shape is inverted and that the convex face (11) becomes a concave face (8).

In an aspect of the invention the membrane (3) has a thickness of from 300 microns to 450 microns, preferably from 325 microns to 400 microns.

In an aspect of the invention the membrane (3) material is a thermoplastic material. Thermoplastic material is selected from the group consisting of: polypropylene, PET (Polyethylene terephthalate), polystyrene and PE (polyethylene). The membrane (3) is prepared by thermoforming the thermoplastic material into the desired shape corresponding to the mold of the thermoforming apparatus.

Confection product (1) means an ambient, chilled or frozen confection product. Confection product (1) comprises a receptacle (2), a membrane (3), a confection (4) and a confection coating composition (5).

Confection (4) means a sweet-tasting foodstuff comprising a pasteurised mix of ingredients such as water, fat, sweetener, protein, and optionally other ingredients such as emulsifiers, stabilisers, colours and flavours. Confections include yoghurts, custards and frozen confections.

Preferably the confection product (1) is a frozen confection product. Frozen confection product means a receptacle (2), a membrane (3), a frozen confection and a frozen confection coating composition.

Frozen confection means a confection (4) made by freezing a pasteurised mix of ingredients such as water, fat, sweetener, protein, and optionally other ingredients such as emulsifiers, stabilisers, colours and flavours. Frozen confections may be aerated. The frozen confection is selected from the group consisting of water ice, milk-ice, ice cream, frozen yoghurt, frozen custard, sorbet, gelato and mixtures thereof. Ice cream may be selected from the group consisting of dairy ice cream, non-dairy ice cream and mixtures thereof. Preferably the frozen confection comprises ice cream, frozen yoghurt or mixtures thereof. Preferably the frozen confection is aerated. The frozen confection may be prepared, for example, according to methods provided in the 'The Science of Ice Cream', C. Clarke, RSC 2004, chapters 3, 4 and 8; and 'Ice Cream' 5th Ed., Marshall and Arbuckle, 1996, Chapman & Hall, New York. N.Y., in particular chapters 11, 12 and 22.

The confection coating composition (5) is a fat-based coating composition selected from the group consisting of chocolate, chocolate analogue, fruit-fat composition and mixtures thereof. Preferably the confection coating composition is a frozen confection coating composition The frozen confection coating composition is a fat-based coating composition selected from the group consisting of chocolate, chocolate analogue, fruit-fat composition and mixtures thereof.

Chocolate means dark, milk or white chocolate. Milk and dark chocolate typically comprise cocoa butter, nonfat cocoa solids, sweetener and emulsifier, as described in ('The Science of Ice Cream'; C. Clarke, RSC Paperbacks 2004, page 57). Milk chocolate further comprises milk powder as a substitute for some of the non-fat cocoa solids and sugar. White chocolate does not comprise non-fat cocoa solids. Chocolate may further comprise: flavourings, colours or both flavours and colours.

Chocolate analogue, also known as couverture, means a chocolate-like material that, in addition to the ingredients of chocolate or as a substitute (full or in part) for cocoa butter, comprise fats other than cocoa butter, for example: cocoa butter equivalents; coconut oil; or other vegetable oils.

A fruit-fat composition comprises 70 to 99 wt% fats other than cocoa butter and less than 20 wt% fruit powder. Preferably a fruit-fat composition comprises 70 to 99 wt% fats other than cocoa butter and from 1 wt% to 30 wt% fruit powder.

Preferably the confection coating composition (5) is chocolate. Preferably the frozen confection coating composition is chocolate. The fat-based frozen confection composition may comprise inclusions. Suitable inclusions are defined in 'The Science of Ice Cream'; C. Clarke, RSC Paperbacks 2004, page 84-85.

The confection coating composition is solid at serving temperature of the confection product (1) and is typically liquid during dosing; however, the confection coating composition (5) may be dosed in solid form, e.g.: through dosing a solid disc onto the confection (4). The confection coating composition (5) is dosed onto the surface of the confection (4) and forms a coating on the surface of the confection (4) that has been dosed into the receptacle (2) prior to dosing of the confection coating composition (5). The confection coating composition (5) typically coats the entire surface of the confection (4), preferably, the confection coating composition (5) coats the entire surface of the confection (4). As the receptacle (2) is typically cylindrical and the open face of the receptacle (2) is annular, the dosed confection coating composition (5) typically forms a disc when solidified.

The confection coating composition (5) once solidified has a thickness of from 0.5 mm to 5.5 mm, from 1.0 mm to 5.15 mm from 2.5 mm to 5.1 mm, 2.8 mm to 5.0, from 3.3 mm to 5.0 mm.

The thickness of the confection coating composition (5) is uniform although variable within a tolerance limit, that is to say that some areas of the frozen confection coating composition are thicker than others, i.e.: the frozen confection coating composition is substantially uniform. In such an embodiment the term thickness refers to the average thickness of the frozen confection coating composition as calculated by drawing a notional line perpendicular to the frozen confection coating composition and measuring the distance between the upper and lower faces of the frozen confection coating composition, repeating this measurement at least 5 times, and calculating the average.

In a further embodiment, the thickness of the confection coating composition (5) is variable, that is the say that some areas thicker than others. In such an embodiment of the term thickness refers to the average thickness of the lid as calculated by drawing a notional line perpendicular to the lid and measuring the distance between the upper and lower faces of the lid, repeating this measurement at last 5 times and calculating the average.

The confection coating composition (5) has a Young's modulus of from 0.3 to 5.0 GPa, more preferably from 0.8 to 2.0 GPa at a serving temperature of -18 degrees centigrade. Preferably the confection coating composition (5) has a Young's modulus of at least 0.1 GPa, more preferably at least 0.2 GPa, more preferably still at least 0.3 GPa, yet more preferably at least 0.5 GPa, even more preferably at least 0.8 GPa, most preferably at least 1 GPa at a serving temperature of -18 degrees centigrade. The confection coating composition (5) preferably has a Young's modulus of at most 5 GPa, more preferably at most 4 GPa, more preferably still at most 3.5 GPa, yet more preferably at most 3 GPa, even more preferably at most 2.5 GPa, most preferably at most 2 GPa at a serving temperature of -18 degrees centigrade. It has been observed that when the confection coating composition (5) has these preferred and more preferred Young's modulus ranges, the audibility of cracking is maximised. The Young's modulus of the confection coating composition (5) was determined using the method described in Example 3 of WO2017/001373 A1.

Preferably the confection coating composition (5) has a yield strength of 1-20 MPa, more preferably 3-15 MPa at a serving temperature of -18 degrees centigrade. Preferably the confection coating composition (5) has a yield strength of at least 1 MPa, more preferably at least 2 MPa, more preferably still at least 3 MPa, yet more preferably at least 4 MPa, even more preferably at least 5 MPa, most preferably at least 5.5 MPa at a serving temperature of -18 degrees centigrade. The confection coating composition (5) preferably has a yield strength of at most 20 MPa, more preferably at most 18 MPa, more preferably still at most 15 MPa, yet more preferably at most 14 MPa, even more preferably at most 12 MPa, most preferably at most 10 MPa at a serving temperature of -18 degrees centigrade. It has been observed that when the confection coating composition (5) has these preferred and more preferred yield strength ranges, the audibility of cracking is maximised. The yield strength of the confection coating composition (5) was determined using the method described in Example 3 of WO2017/001373 A1.

Preferably the confection coating composition (5) has a work of fracture of at least 0.0002 J, more preferably at least 0.0004 J, more preferably still at least 0.0006 J, yet more preferably at least 0.0007 J at a serving temperature of -18 degrees centigrade. The confection coating composition (5) preferably has a work of fracture of at most 0.0022 J, more preferably at most 0.002 J, more preferably still at most 0.0018 J, yet more preferably at most 0.0015 J, even more preferably at most 0.0012 J, most preferably at most 0.0010 J at a serving temperature of -18 degrees centigrade. It has been observed that when the confection coating composition (5) has these preferred and more preferred work of fracture ranges, the audibility of cracking is maximised. The work of fracture of the lid was determined using the method described in Example 3 of WO2017/001373 A1.

Confection products (1) may comprise one or more confections (4), for example, from one to three confections (4) may be dosed into the container prior to any confection coating composition (5). The confection (4) may also comprise additional components such as one or more inclusions and one or more confection coating compositions (5), i.e.: variegate, sauce or syrup as described in in 'Ice Cream' 7th Ed., Goff and Hartel, 2013, chapter 4. The inclusions and confection coating compositions (5) are typically extruded together with the confection (4) and positioned within the f confection (4) prior to coating with a confection coating composition (5). Exemplary inclusions are described in 'Ice Cream' 7th Ed., Goff and Hartel, 2013, pages 106-114. Inclusions include for example, fruit pieces, chocolate pieces, confectionary, nuts and bakery goods (wafer, biscuit and cake pieces), as described in 'The Science of Ice Cream', C. Clarke, RSC 2004, page 54-59. Additional components may be selected from the group consisting of inclusions, one or more confection coating compositions and mixtures thereof. The inclusions may be in the form of ribbons of a solid fat-based edible material (i.e.: a fat-based coating composition) that are formed during dosing of the confection (4) into the receptacle (2), such as those described in WO2017/001373 A1. Additionally, the receptacle (2) that the confection (4) is dosed into may have a coating on the internal surface, such as the shell described in WO2017/001373 A1.

Where the confection (4) is a frozen confection, the frozen confection must have particular structural characteristics in order to ensure that when the product is manufactured, stored, transported, sold, bought, shipped to the point of consumption, and stored at the point of consumption that it will provide adequate support to confection coating composition to prevent to confection coating composition from cracking due to the mechanical impacts it will experience during all these stages.

The frozen confection must also have particular structural characteristics to ensure that the product behaves in the desired way such that the application of force to the exterior of the container will result in audible cracking of the shell and one or more ribbons of a second solid fat-based edible composition within the deformable container.

Thus, when force is applied to the membrane (3), the frozen confection must deform readily away from the areas at which pressure is applied. This ensures that the frozen confection coating composition is deformed by the pressure being applied and therefore fractures. If the frozen confection is too hard or for any other reason not capable of deformation away from the areas at which pressure is applied, then it would resist the external force and consequently the cracking of the frozen confection coating composition would be inhibited.

Conversely, if the frozen confection is too soft, although the frozen confection would allow the frozen confection coating composition to be deformed and cracked by the pressure being applied externally, it is highly likely that the product would not survive the distribution chain and at the point of consumption the shell would have already suffered significant damage and would therefore not provide the desired cracking sound.

The frozen confection preferably has a specific heat capacity of 2500 to 3600, more preferably 2750 to 3350, most preferably 2900 to 3200 J/kg/K. It has been observed that a frozen confection with the various preferred ranges of specific heat capacity when subject to periodic elevated temperatures, such as during transportation from shop to home, provides a source of cooling to the shell such that the shell does not begin to lose its crystalline structure or change its polymorph and become soft.

Whilst the frozen confection must deform readily away from the areas at which pressure is applied to allow the frozen confection coating composition to crack, the frozen confection must also not deform too much because it needs to be retained in the receptacle (2).

The frozen confection preferably comprises at most 30 % w/w of total sugars. As used herein the term "sugars" refers exclusively to digestible mono- and di-saccharides. The total sugar content of a frozen confection is thus the sum of all of the digestible monoand di-saccharides present within the frozen confection, including any lactose from milk solids and any sugars from fruits. The frozen confection comprises more preferably at most 25, most preferably at most 20 % w/w total sugars. Preferably the frozen confection contains at least 1, more preferably at least 2, most preferably at least 5 % w/w total sugars.

The frozen confection further typically contains stabilisers, the primary purposes of which is to produce smoothness in body and texture, retard or reduce ice and lactose crystal growth during storage, and to provide uniformity of product and resistance to melting. Additionally, they stabilize the mix to prevent wheying off, produce a stable foam with easy cut-off in the freezer, and slow down moisture migration from the product to the package or the air. The action of stabilisers in ice cream results from their ability to form gel-like structures in water and to hold free water. Iciness can be controlled by stabilizers due to a reduction in the growth of ice crystals over time related to a reduction in water mobility as water is entrapped by their entangled network structures. Suitable stabilisers include one or more of tara gum, guar gum, locust been gum, carrageenan, gelatin, alginate, carboxymethyl cellulose, xanthan and pectin. The frozen confection comprises preferably at least 0.05, more preferably at least 0.10, most preferably at least 0.2 % w/w of stabilisers. Preferably the frozen confection comprises at most 5, more preferably at most 3, most preferably at most 2.5 % w/w of stabilisers.

The frozen confection may also contain non-saccharide sweetener which as defined herein consist of: the intense sweeteners aspartame, saccharin, acesulfame K, alitame, thaumatin, cyclamate, glycyrrhizin, stevioside, neohesperidine, sucralose, monellin and neotame; and the sugar alcohols HSH (hydrogenated starch hydrosylate (also known as polyglycitol)), eythritol, arabitol, glycerol, xylitol, sorbitol, mannitol, lactitol, maltitol, isomalt, and palatinit.

The frozen confection may be aerated. The term "aerated" means that gas has been intentionally incorporated into the product, such as by mechanical means. The gas can be any food-grade gas such as air, nitrogen or carbon dioxide. The extent of aeration is typically defined in terms of "overrun" (OR). In the context of the present invention, % overrun is defined in volume terms (measured at atmospheric pressure) as:

$$OR = \frac{\text{volume of frozen aerated product} - \text{volume of premix at ambient temp}}{\text{volume of premix at ambient temp}} \times 100$$

Preferably the frozen confection has an overrun of from 40 % to 150 %, more preferably from 60 % to 120 %.

Preferably the ice content of the frozen confection at -18 degrees centigrade is from 35 to -55 wt%, more preferably from 40 to 50 wt%. The ice content is calculated from the freezing curve for sucrose solutions as described, for example, on pages 28-29 of "The Science of Ice Cream", C. Clarke, RSC, Cambridge, UK, 2004.

Preferably the frozen confection has a Vickers hardness of 0.042-0.36, preferably 0.072-0.21 at -18 degrees centigrade. It has been observed that when the frozen confection has these preferred and most preferred hardness ranges, the audibility of cracking of the frozen confection coating composition is maximised. The method for determining the Vickers hardness of the frozen confection is described in Example 4 of WO2017/001373 A1.

The frozen confection product is prepared by dosing one or more frozen confections into a receptacle (2) such as a tub, cup or pint simultaneously or independently of any additional component. Such dosing is described in WO2017/001373 A1.

In a further aspect of the invention a process for the preparation of a confection product (1) is provided. The process for the preparation of a confection product (1) comprises the steps of:

a. Providing a receptacle (2) comprising one or more confection compositions (4) (as described in WO2017/001373 A1);
b. Dosing a confection coating composition (5) into the receptacle (2) of step a.
c. Placing a membrane (3) in contact with the rim, lip or ledge of the receptacle (2) or in contact with the confection coating composition (5); and,
d. Optionally cooling the product of step c ; wherein the membrane (3) comprises a convex recess (6) and convex face (11), the frozen confection coating composition (5) comprises a surface (7) opposite to the concave face (8) of the convex recess (6) and the distance (16) between the surface (7) of the frozen confection coating composition (5) and the closest point (12) of the concave face (8) of the membrane (3) is from 0% to 95% of the maximum height (9) of the concave face (8), wherein the surface (7) of the frozen confection coating composition (5) is substantially planar.

In a further aspect of the invention, the membrane (3) of step c. is attached to the rim of the receptacle (2).

In a further aspect of the invention, the cooling of step d. is chilling or freezing. Chilling is from -10 °C to 5 °C, preferably from - 5 °C to 0 °C. Freeing is from -25 °C to 5 °C, preferably from -20 °C to -10 °C.

In a further aspect of the invention a process for the preparation of a confection product (1) wherein the dosing of the confection (4) and confection coating composition (5) of steps a. and b. is simultaneous or consecutive.

In a further aspect of the invention a process for the preparation of a confection product (1) wherein the confection product (1) receptacle (2) is sealed with a means for closure, for example a lid.

**Figures:**

Figure 1: Membrane (3)

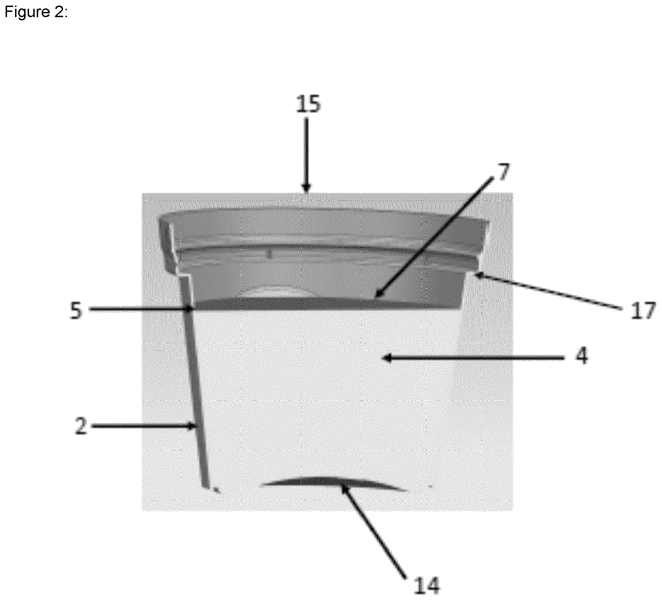

Figure 2: Receptacle (2)
Figure 3: Frozen confection product (1)
Figure 4: Receptacle (2) (a single serve tub) comprising a coated frozen confection. The figure shows that when a consumer applies force through the use of a spatula, the coating cracks to provide a small number of pieces (3).
Figure 5: Membrane (3) is depressed by consumer thumbs. The membrane inverts and because the distance (16) is from 0% to 95% of the maximum height (9) of the concave face of the membrane (8), the force is also applied to the confection coating composition (5), cracking the confection coating composition (5).
Figure 6: Membrane (3) is removed from the confection product (1) to reveal at least ten pieces of confection coating composition (5).
Figure 7: The confection (4) and confection coating composition (5) can be scooped out of the receptacle (2) immediately after cracking the confection coating composition (5) into multiple pieces using the membrane.

**Examples**

Preparation of a frozen confection product (1):

Preparation of membrane (3):

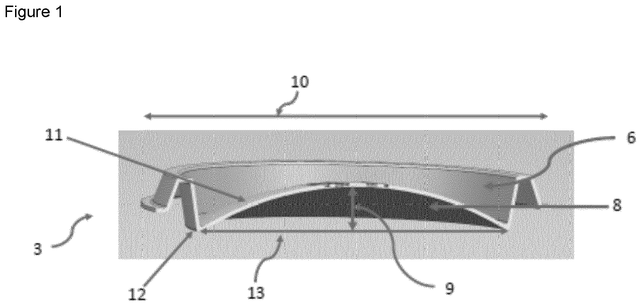

Polypropylene in sheet form was moulded using thermoforming apparatus to form a membrane (3) with a shape corresponding to Figure 1 and having a thickness of 350 microns.

Preparation of a receptacle (2) comprising frozen confection (4) and a frozen confection coating composition (5):

A receptacle (2) (180 ml) was dosed with frozen confection (100 ml) and frozen confection coating compositing (10 g) according to the method provided in WO2017/001373 A1. The frozen confection coating composition corresponds to the 'lid' of WO2017/001373 A1.

Assembly of a frozen confection product (1):

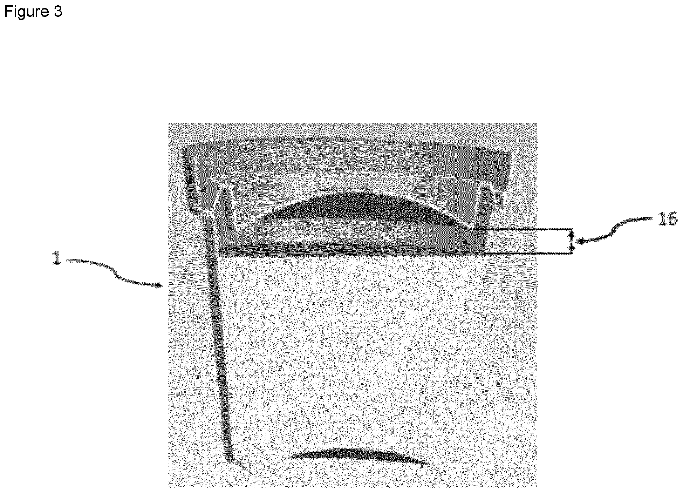

The membrane (3) was placed over the opening of the receptacle's open face (15), corresponding to the configuration illustrated by Figure 3. The distance between the surface of the confection coating composition (7) and the closest point of the concave face (8) of the membrane (3) was 85 % of the maximum height of the concave face (9). The closest point of the concave face (8) of the membrane (3) was the base of the concave face of the membrane (12).

Consumption of frozen confection and frozen confection coating composition:

The frozen confection product was allowed to stand at room temperature for 10 minutes.

1. Use of Spatula:

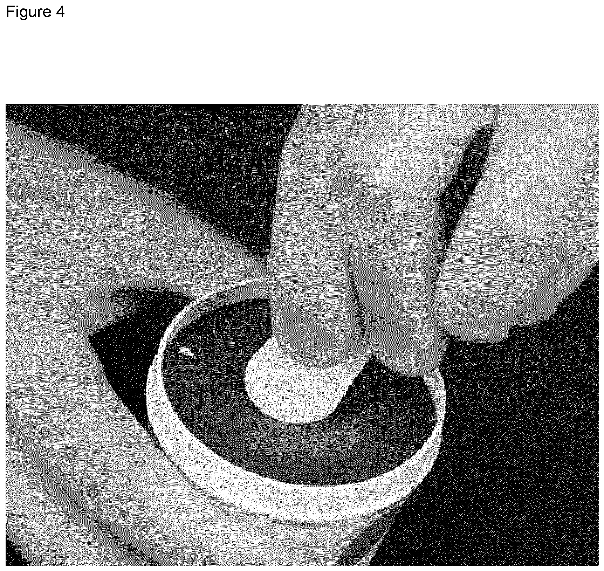

The membrane (3) of the frozen confection product prepared was removed and a spatula was used to break the frozen confection coating composition's disc. The disc was broken into three pieces, Figure 4.

2. Use of fingers and thumbs:

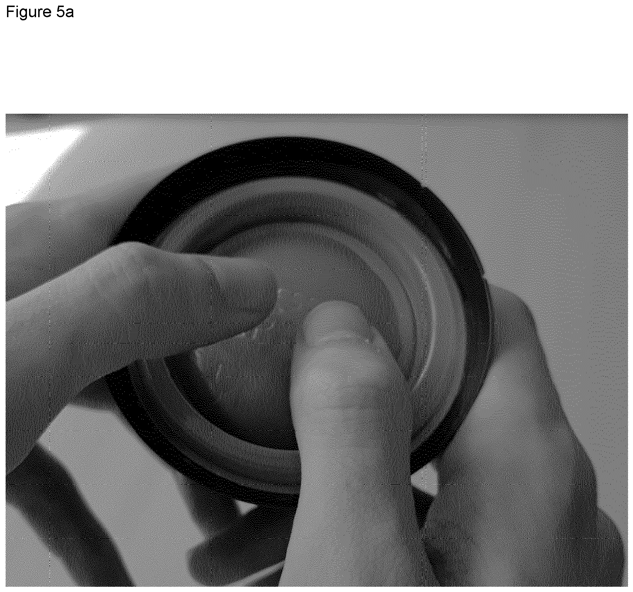

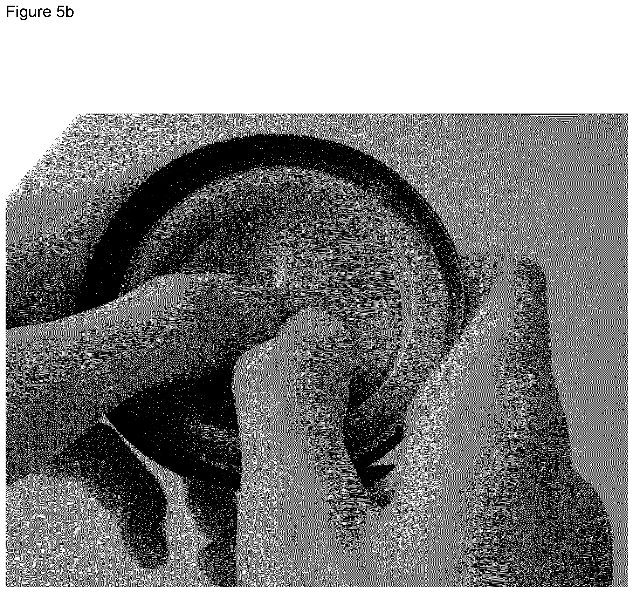

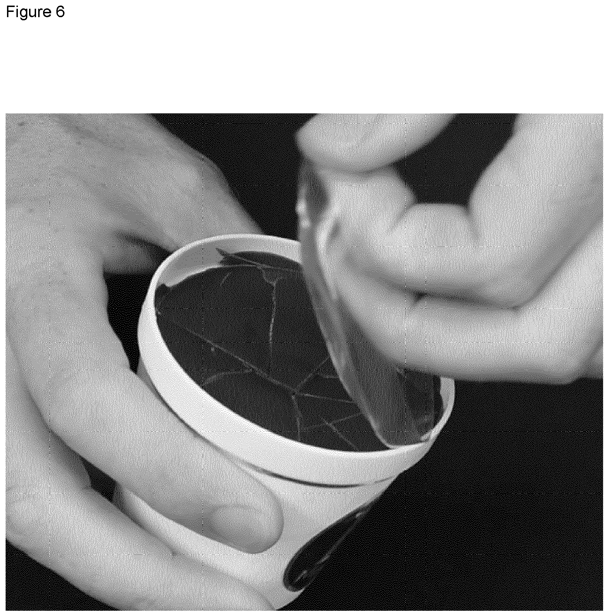

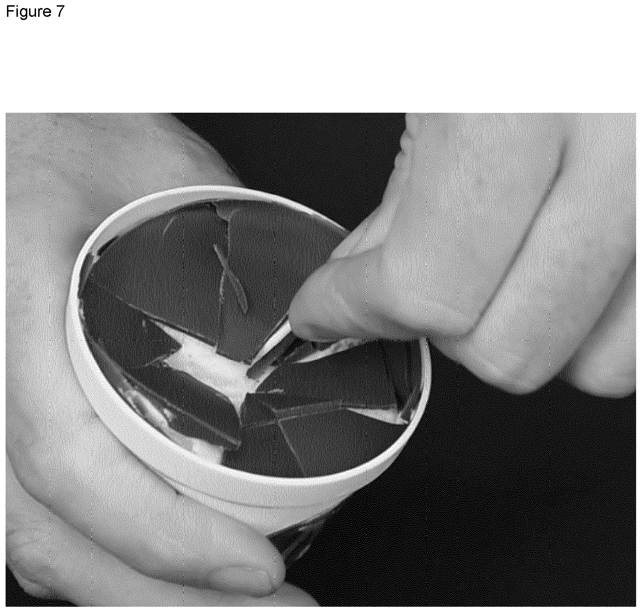

The membrane (3) was depressed by the force of thumbs of a consumer, Figure 5. The membrane (3) becomes inverted (Figure 5) and the force applied to the membrane (3) breaks the frozen confection coating composition's disc into multiple pieces, at least ten pieces are shown in Figure 6. The frozen confection is immediately accessible after breaking the frozen confection coating composition through the use of the membrane (3) (Figure 7).

The examples demonstrate that the use of a membrane (3) comprising a convex recess (6) that is depressed through the use of a consumers' fingers and/or thumbs provides a significantly larger number of fissures than the use of a spatula or spoon. The use of the membrane results in a significantly larger number of fissures and the fissure pattern results in a product that is much easier to eat by the consumer because the spatula can access individual pieces of the coating. Furthermore, the present invention is particularly advantageous for single-serve confection products.

**Claims**

1. A frozen confection product (1) comprising a receptacle (2), a membrane (3), one or more frozen confections (4) and at least one frozen confection coating composition (5), wherein the receptacle (2) comprises the frozen confection (4) and frozen confection coating composition (5), and the membrane (3) comprises a convex recess (6) and convex face (11), wherein the frozen confection coating composition (5) comprises a surface (7) and the surface (7) is opposite to the concave face (8) of the convex recess (6) and the distance (16) between the surface (7) of the frozen confection coating composition (5) and the closest point (12) of the concave face (8) of the membrane (3) is from 0 % to 95 % of the maximum height (9) of the concave face (8), wherein the surface (7) of the frozen confection coating composition (5) is substantially planar.

2. A frozen confection product (1) according to claim 1, wherein the distance (16) between the surface (7) of the frozen confection coating composition (5) and the closest point (12) of the concave face (8) of the membrane (3) is from 20 % to 90 % of the height (9) of the concave face (8) at the central axis of the concave face (8).

3. A frozen confection product (1) according to claim 1 or 2, wherein the membrane (3) is annular and has a diameter (10) of from 40.0 mm to 120.0 mm.

4. A frozen confection product (1) according to claims 1 to 3, wherein the base (12) of the concave face (8) of the membrane (3) is annular and has a diameter of from 40.0 mm to 100.0 mm.

5. A frozen confection product (1) according to claims 1 to 4, wherein the ratio of the height of the concave face (9) of the membrane (3) to the diameter of the base of the concave face (8) is from 1:1 to 1:30.

6. A frozen confection product (1) according to claims 1 to 5, wherein the membrane (3) is a thermo plastic material.

7. A frozen confection product (1) according to claims 1 to 6, wherein the membrane (3) has a thickness of from 300 microns to 450 microns.

8. A frozen confection product (1) according to claims 1 to 7, wherein the frozen confection coating composition (5) is selected from the group consisting of chocolate and chocolate analogues.

9. A frozen confection product (1) according to claims 1 to 8, wherein the average thickness of the frozen confection coating composition (5) is from 0.5 mm to 5.5 mm.

10. A frozen confection product (1) according to claims 1 to 9, wherein the frozen confection (4) has a Vickers' hardness of from 0.042-0.36 at a serving temperature of -18 °C.

11. A confection product (1) according to claims 1 to 10, wherein the confection coating composition (5) has a Young's modulus f from 3.0 to 5.0 GPa at a serving temperature of -18 °C

12. A confection product (1) according to claims 1 to 11, wherein the longest length of the surface (7) is from 50 to 200% of the diameter of the base (12) of the concave face (8) of the membrane (3).

13. A process for the preparation of a frozen confection product (1) according to claims 1 to 12 comprising the steps of:

    a. Dosing a receptacle (2) with confection (4) and a frozen confection coating composition (5); and,
    b. Placing a membrane (3) in contact with the rim, lip or ledge (17) of the receptacle (2) ; wherein the membrane (3) comprises a convex recess (6) and convex face (11), the frozen confection coating composition (5) comprises a surface (7) and the surface (7) is opposite to the concave face (8) of the convex recess (6) and the distance (16) between the surface (7) of the frozen confection coating composition (5) and the closest point (12) of the concave face (8) of the membrane (3) is from 0 % to 95 % of the maximum height (9) of the concave face (8), wherein the surface (7) of the frozen confection coating composition (5) is substantially planar.

14. A process according to claims 13, wherein the dosing of the frozen confection (4) and frozen confection coating composition (5) of step a. is simultaneous or consecutive.

**Patentansprüche**

1. Gefrorenes Konfektprodukt (1), das eine Hülle (2), eine Membran (3), ein oder mehrere gefrorene Konfekte (4) und wenigstens eine Beschichtungsmischung (5) für gefrorenes Konfekt umfasst, wobei die Hülle (2) das gefrorene Konfekt (4) und die Beschichtungsmischung (5) für gefrorenes Konfekt umfasst und wobei die Membran (3) eine konvexe Vertiefung (6) und eine konvexe Fläche (11) umfasst, wobei die Beschichtungsmischung (5) für gefrorenes Konfekt eine Oberfläche (7) umfasst und wobei die Oberfläche (7) gegenüber der konkaven Fläche (8) der konvexen Vertiefung (6) angeordnet ist und wobei der Abstand (16) zwischen der Oberfläche (7) der Beschichtungsmischung (5) für gefrorenes Konfekt und dem nächsten Punkt (12) der konkaven Fläche (8) der Membran (3) im Bereich von 0 % bis 95 % der maximalen Höhe (9) der konkaven Fläche (8) liegt, wobei die Oberfläche (7) der Beschichtungsmischung (5) für gefrorenes Konfekt im Wesentlichen eben ist.

2. Gefrorenes Konfektprodukt (1) nach Anspruch 1, wobei der Abstand (16) zwischen der Oberfläche (7) der Beschichtungsmischung (5) für gefrorenes Konfekt und dem nächsten Punkt (12) der konkaven Fläche (8) der Membran (3) im Bereich von 20 % bis 90 % der Höhe (9) der konkaven Fläche (8) bei der Mittelachse der konkaven Fläche (8) liegt.

3. Gefrorenes Konfektprodukt (1) nach Anspruch 1 oder 2, wobei die Membran (3) ringförmig ist und einen Durchmesser (10) im Bereich von 40,0 mm bis 120,0 mm hat.

4. Gefrorenes Konfektprodukt (1) nach Anspruch 1 bis 3, wobei die Basis (12) der konkaven Fläche (8) der Membran (3) ringförmig ist und einen Durchmesser im Bereich von 40,0 mm bis 100,0 mm hat.

5. Gefrorenes Konfektprodukt (1) nach Anspruch 1 bis 4, wobei das Verhältnis der Höhe der konkaven Fläche (9) der Membran (3) zum Durchmesser der Basis der konkaven Fläche (8) im Bereich von 1:1 bis 1:30 liegt.

**6.** Gefrorenes Konfektprodukt (1) nach Anspruch 1 bis 5, wobei die Membran (3) aus einem thermoplastischen Material besteht.

**7.** Gefrorenes Konfektprodukt (1) nach Anspruch 1 bis 6, wobei die Membran (3) eine Dicke im Bereich von 300 Mikrometer bis 450 Mikrometer hat.

**8.** Gefrorenes Konfektprodukt (1) nach Anspruch 1 bis 7, wobei die Beschichtungsmischung (5) für gefrorenes Konfekt aus der Gruppe gewählt ist, die Schokolade und Analogschokolade enthält.

**9.** Gefrorenes Konfektprodukt (1) nach Anspruch 1 bis 8, wobei die mittlere Dicke der Beschichtungsmischung (5) für gefrorenes Konfekt im Bereich von 0,5 mm bis 5,5 mm liegt.

**10.** Gefrorenes Konfektprodukt (1) nach Anspruch 1 bis 9, wobei das gefrorene Konfekt (4) bei einer Serviertemperatur von -18 °C eine Vickers-Härte im Bereich von 0,042-0,36 hat.

**11.** Konfektprodukt (1) nach Anspruch 1 bis 10, wobei die Konfektbeschichtungsmischung (5) bei einer Serviertemperatur von -18 °C einen Elastizitätsmodul f im Bereich von 3,0 bis 5,0 GPa hat.

**12.** Konfektprodukt (1) nach Anspruch 1 bis 11, wobei die größte Länge der Oberfläche (7) im Bereich von 50 bis 200 % des Durchmessers der Basis (12) der konkaven Fläche (8) der Membran (3) liegt.

**13.** Verfahren für die Herstellung eines gefrorenen Konfektprodukts (1) nach Anspruch 1 bis 12, das die folgenden Schritte umfasst:

a. Dosieren einer Hülle (2) mit Konfekt (4) und einer Beschichtungsmischung (5) für gefrorenes Konfekt; und
b. Anordnen einer Membran (3) in Kontakt mit dem Rand, der Lippe oder dem Vorsprung (17) der Hülle (2); wobei die Membran (3) eine konvexe Vertiefung (6) und eine konvexe Fläche (11) umfasst, wobei die Beschichtungsmischung (5) für gefrorenes Konfekt eine Oberfläche (7) aufweist und wobei die Oberfläche (7) gegenüber der konkaven Fläche (8) der konvexen Vertiefung (6) angeordnet ist, und wobei der Abstand (16) zwischen der Oberfläche (7) der Beschichtungsmischung (5) für gefrorenes Konfekt und dem nächsten Punkt (12) der konkaven Fläche (8) der Membran (3) im Bereich von 0 % bis 95 % der maximalen Höhe (9) der konkaven Fläche (8) liegt, wobei die Oberfläche (7) der Beschichtungsmischung (5) für gefrorenes Konfekt im Wesentlichen eben ist.

**14.** Verfahren nach Anspruch 13, wobei das Dosieren des gefrorenen Konfekts (4) und der Beschichtungsmischung (5) für gefrorenes Konfekt von Schritt a. gleichzeitig oder nacheinander ausgeführt wird.

**Revendications**

**1.** Produit de confiserie congelée (1) comprenant un réceptacle (2), une membrane (3), une ou plusieurs confiseries congelées (4) et au moins une composition de revêtement de confiserie congelée (5), dans lequel le réceptacle (2) comprend les confiserie congelée (4) et composition de revêtement de confiserie congelée (5), et la membrane (3) comprend un creux convexe (6) et une face convexe (11), dans lequel la composition de revêtement de confiserie congelée (5) comprend une surface (7) et la surface (7) est opposée à la face concave (8) du creux convexe (6) et la distance (16) entre la surface (7) de la composition de revêtement de confiserie congelée (5) et le point le plus proche (12) de la face concave (8) de la membrane (3) est de 0 % à 95 % de la hauteur maximale (9) de la face concave (8), dans lequel la surface (7) de la composition de revêtement de confiserie congelée (5) est substantiellement plane.

**2.** Produit de confiserie congelée (1) selon la revendication 1, dans lequel la distance (16) entre la surface (7) de la composition de revêtement de confiserie congelée (5) et le point le plus proche (12) de la face concave (8) de la membrane (3) est de 20 % à 90 % de la hauteur (9) de la face concave (8) sur l'axe central de la face concave (8).

**3.** Produit de confiserie congelée (1) selon la revendication 1 ou 2, dans lequel la membrane (3) est annulaire et présente un diamètre (10) de 40,0 mm à 120,0 mm.

**4.** Produit de confiserie congelée (1) selon les revendications 1 à 3, dans lequel la base (12) de la face concave (8) de la membrane (3) est annulaire et présente un diamètre de 40,0 mm à 100,0 mm.

5. Produit de confiserie congelée (1) selon les revendications 1 à 4, dans lequel le rapport de la hauteur de la face concave (9) de la membrane (3) au diamètre de la base de la face concave (8) est de 1:1 à 1:30.

6. Produit de confiserie congelée (1) selon les revendications 1 à 5, dans lequel la membrane (3) est un matériau thermoplastique.

7. Produit de confiserie congelée (1) selon les revendications 1 à 6, dans lequel la membrane (3) présente une épaisseur de 300 microns à 450 microns.

8. Produit de confiserie congelée (1) selon les revendications 1 à 7, dans lequel la composition de revêtement de confiserie congelée (5) est choisie dans le groupe consistant en chocolat et analogues de chocolat.

9. Produit de confiserie congelée (1) selon les revendications 1 à 8, dans lequel l'épaisseur moyenne de la composition de revêtement de confiserie congelée (5) est de 0,5 mm à 5,5 mm.

10. Produit de confiserie congelée (1) selon les revendications 1 à 9, dans lequel la confiserie congelée (4) présente une dureté de Vickers de 0,042-0,36 à une température de service de -18°C.

11. Produit de confiserie (1) selon les revendications 1 à 10, dans lequel la composition de revêtement de confiserie (5) présente un module de Young de 3,0 à 5,0 GPa à une température de service de -18°C.

12. Produit de confiserie (1) selon les revendications 1 à 11, dans lequel la longueur la plus longue de la surface (7) est de 50 à 200 % du diamètre de la base (12) de la face concave (8) de la membrane (3).

13. Procédé pour la préparation d'un produit de confiserie congelée (1) selon les revendications 1 à 12, comprenant les étapes de :

   a. dosage d'un réceptacle (2) avec une confiserie (4) et une composition de revêtement de confiserie congelée (5) ; et,
   b. disposition d'une membrane (3) en contact avec les bord, lèvre ou rebord (17) du réceptacle (2) ; dans lequel la membrane (3) comprend un creux convexe (6) et une face convexe (11), la composition de revêtement de confiserie congelée (5) comprend une surface (7) et la surface (7) est opposée à la face concave (8) du creux convexe (6) et la distance (16) entre la surface (7) de la composition de revêtement de confiserie congelée (5) et le point le plus proche (12) de la face concave (8) de la membrane (3) est de 0 % à 95 % de la hauteur maximale (9) de la face concave (8), dans lequel la surface (7) de la composition de revêtement de confiserie congelée (5) est substantiellement plane.

14. Procédé selon la revendication 13, dans lequel le dosage des confiserie congelée (4) et composition de revêtement de confiserie congelée (5) de l'étape a. est simultané ou consécutif.

Figure 1

Figure 2:

Figure 3

Figure 4

Figure 5a

Figure 5b

Figure 6

Figure 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017001372 A1
- US 5135767 A
- JP 3121400 U

- WO 2017001373 A1

**Non-patent literature cited in the description**

- **C. CLARKE.** The Science of Ice Cream. RSC Paperbacks, 2004, 101
- **C. CLARKE.** The Science of Ice Cream. RSC, 2004
- Ice Cream. Chapman & Hall, 1996
- **C. CLARKE.** The Science of Ice Cream. RSC Paperbacks, 2004, 57

- **C. CLARKE.** The Science of Ice Cream. RSC Paperbacks, 2004, 84-85
- **GOFF ; HARTEL.** Ice Cream. 2013
- Ice Cream. 2013, 106-114
- **C. CLARKE.** The Science of Ice Cream. RSC, 2004, 54-59
- **C. CLARKE.** The Science of Ice Cream. RSC, 2004, 28-29